# EUROPEAN PATENT APPLICATION

(11) **EP 1 275 420 A1**
(43) Date of publication of application: **15.01.2003**
(21) Application number: 01116933.1
(22) Date of filing: 11.07.2001
(51) Int. Cl.: A63B 24/00, A63F 13/06

(54) **Interactive game apparatus by utilizing parameters related to exerciser user**

(71) Applicant: Chang, Huang-Tung, Ho-Mei Town, Chang-Hua Hsien (TW)
(72) Inventor: Chang, Huang-Tung, Ho-Mei Town, Chang-Hua Hsien (TW)
(74) Representative: Winter, Brandl, Fürniss, Hübner, Röss, Kaiser, Polte Partnerschaft

(57) **Abstract**

An interactive game apparatus comprises a heartbeat detection device (1) worn by user or operatively coupled to a part of user. A heartbeat count measured by heartbeat detection device (1) is converted into heartbeat pulse which is further decoded prior to transmitting to game machine (2). A converter and receiver (5) in game machine (2) converts the received heartbeat pulse into a heartbeat value as parameters for effecting an interactive game between user and game machine.

## Description

### FIELD OF THE INVENTION

The present invention relates to game machines and more particularly to an interactive game apparatus by utilizing parameters related to an exerciser user.

### BACKGROUND OF THE INVENTION

Conventionally, a game machine is for entertainment only. Also, an exercise is for train body only. As far as the present inventor knows, there is no apparatus disclosed for combining a game machine and an exercise. Thus, it is desirable to provide an interactive game apparatus by utilizing parameters related to person using exerciser.

### SUMMARY OF THE INVENTION

It is therefore an object of the present invention to provide an interactive game apparatus comprising a heartbeat detection device worn by user or operatively coupled to a part of user. A heartbeat count measured by heartbeat detection device is converted into heartbeat pulse which is further decoded prior to transmitting to game machine. A converter and receiver in game machine converts the received heartbeat pulse into a heartbeat value as parameters for effecting an interactive game between user and game machine.

The above and other objects, features and advantages of the present invention will become apparent from the following detailed description taken with the accompanying drawings.

### BRIEF DESCRIPTION OF THE DRAWINGS

FIG. 1 is an environmental view of a preferred embodiment of interactive game apparatus according to the invention in use;
FIG. 2 is a flow chart illustrating a process of counting heartbeat of FIG. 1 user;
FIG. 3 is a block diagram of converter and receiver according to the invention;
FIG. 4 is a block diagram of image processing device according to the invention;
FIG. 5 is a plan view of display showing a game picture of boat rowing;
FIG. 6 is a flow chart illustrating the process of FIG. 5;
FIG. 7 is a flow chart illustrating different counts of heartbeat during a game according to the invention;
FIG. 8 is a graph illustrating heartbeat change versus time according to one configuration of the invention;
FIG. 9 is a graph illustrating heartbeat change versus time according to another configuration of the invention;
FIG. 10 is a plan view of display showing a game picture of road racing;
FIG. 11 is an environmental view of another preferred embodiment of interactive game apparatus according to the invention in use; and
FIG. 12 is a block diagram of converter and receiver of FIG. 11 apparatus according to the invention.

### DETAILED DESCRIPTION OF THE PREFERRED EMBODIMENTS

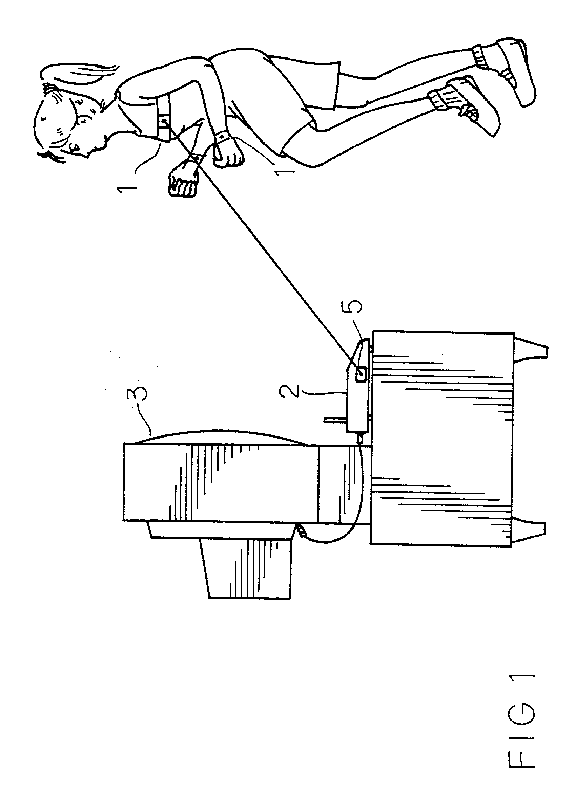

Referring to FIG. 1, there is shown an interactive game apparatus constructed in accordance with the invention comprising a heartbeat detection device 1 worn by a user, the heartbeat detection device 1 including a heartbeat detector and transmitter and a heartbeat count display; a game machine 2 having game software installed therein and including a central processing unit (CPU) capable of processing audio and video signals and a logic unit; a converter and receiver 5 coupled to the heartbeat detection device 1; and a display 3 for showing heartbeat count and information related to game.

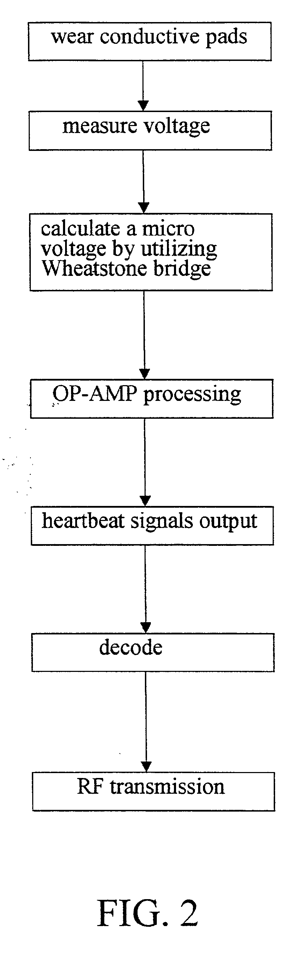

Referring to FIG. 2, a counting of heartbeat of user during exercise will now be described. Firstly, two conductive pads are worn by user. Secondly, measure a voltage drop across the pads. Then calculate a micro voltage from the measured voltage by utilizing Wheatstone bridge principle. Then process the micro voltage in an OP-AMP device for obtaining heartbeat pulse output. Then decode heartbeat pulse output. Finally, transmit the decoded heartbeat pulse output by utilizing a radio frequency (RF) technique. The transmitted signals are received by RF receiver in image processing device. In the embodiment, converter and receiver 5 receives above signals for converting into heartbeat parameter which is in turn employed to realize an interactive game. Parameters utilized by the invention are remained game time, game energy consumption, calorie consumption, and heartbeat safety value. Also, a warning is issued visually and/or audibly when heartbeat of user is not in a safe range. Further, the invention sets a plurality of different heartbeat stages and heartbeat periods so that score and rank of user may be shown after the game, thus increasing entertainment effects.

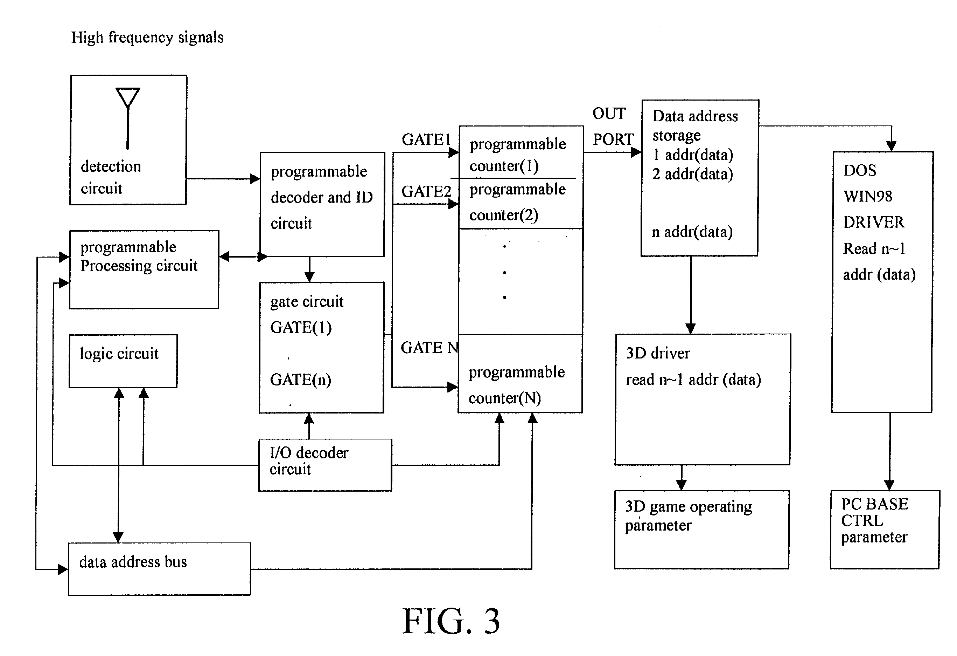

FIG. 3 is a block diagram of converter and receiver according to the invention. Receiver of game machine receives signals from heartbeat detection device 1. Then signals are sent to first decoder circuit for decoding through detection circuit. The decoded signals are then sent to processing circuit and gate circuit which is coupled to logic circuit and second decoder circuit respectively so as to distinguish heartbeat of single user from multiple users. Further, heartbeat data of different users is sent to GATE (1), GATE(2),...,GATE(n). Then such heartbeat data is sent to data address bus for processing. Then such data is sent to counting mechanism includign a plurality of programmable counters CTC(1), CTC(2),...,CTC(n) corresponding to GATE (1), GATE(2),...,GATE(n) respectively. As such, data in GATE (1) is processed in CTC(1), data in GATE (2) is processed in CTC(2), and so on. The processed data is stored in data address storage so that a game program may access data therefrom prior to converting them into heartbeat value capable of being identified by the game program. Note that game begins immediately after heartbeat of user is detected by heartbeat detection device 1.

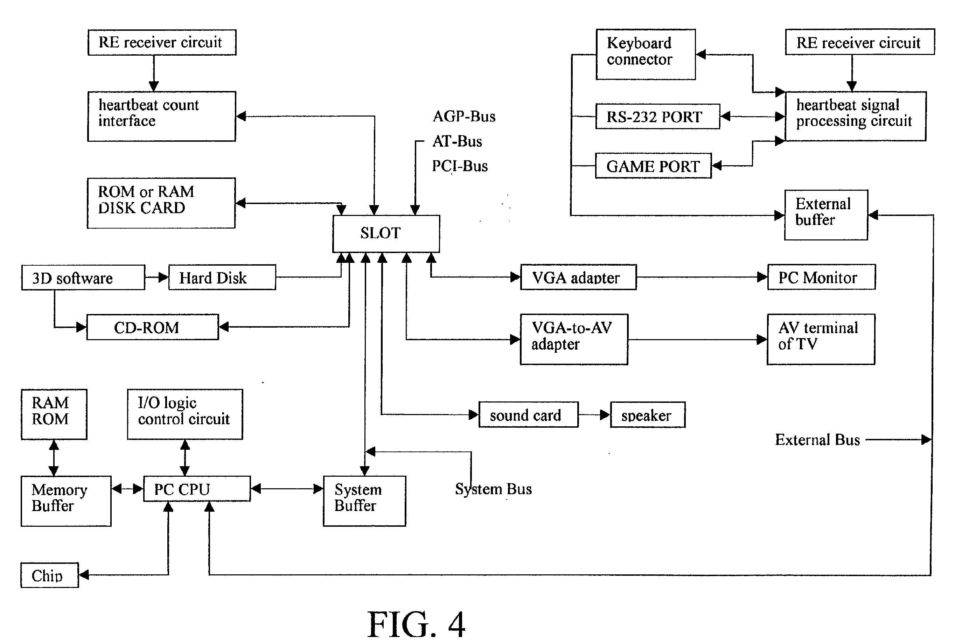

FIG. 4 is a block diagram of image processing device according to the invention. Data (e.g., voltage, blood flow, pulse count, etc.) measured from user may be converted into heartbeat signals for transmission. Heartbeat converter and receiver 5 in game machine 2 receives the heartbeat signals. In response, counter is activated to count heartbeat for obtaining a heartbeat parameter which is in turn sent to CPU. Further, image processing device continuously generates and outputs images to display 3. As a result, an interactive game is shown on display 3.

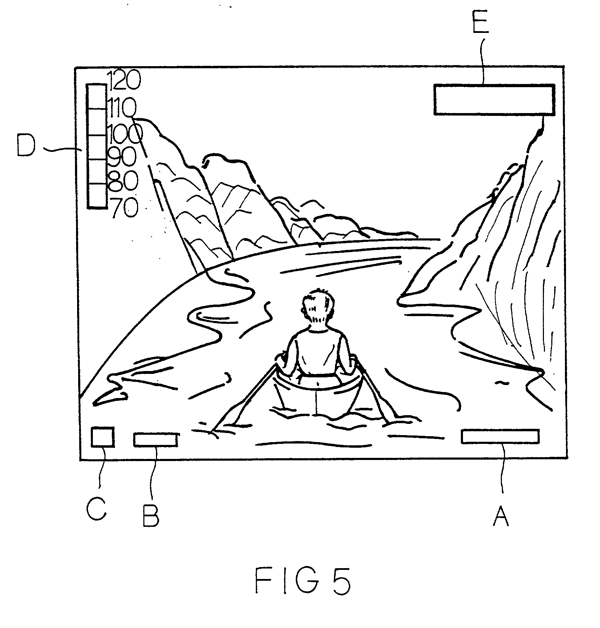

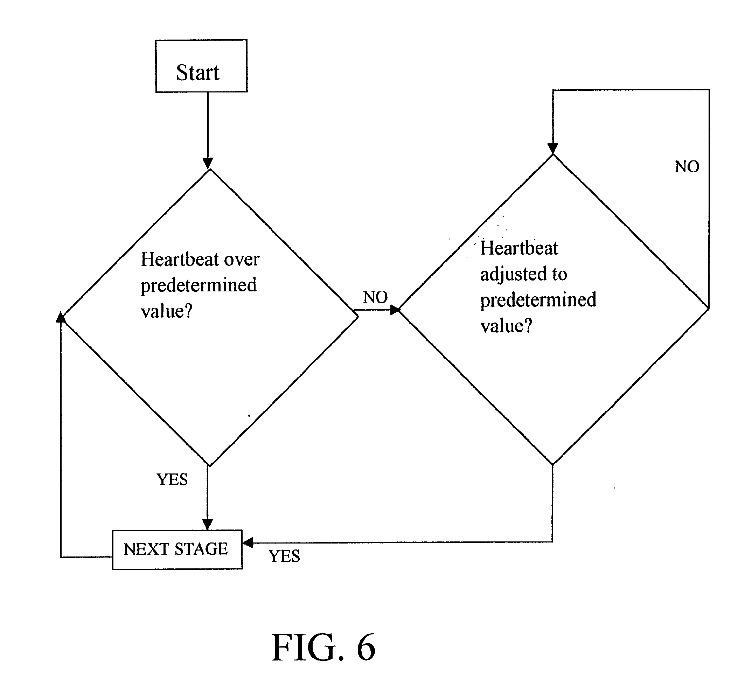

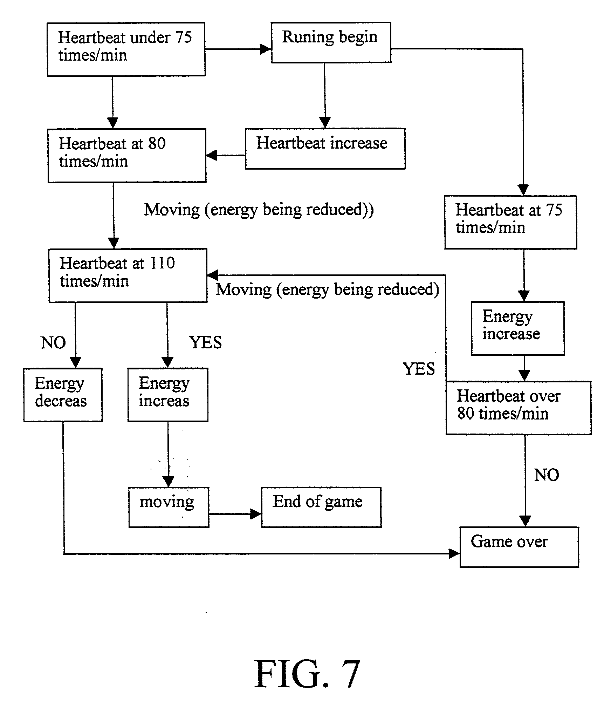

FIG. 5 is a plan view of display showing a game picture of boat rowing, FIG. 6 is a flow chart illustrating the process of FIG. 5, and FIG. 7 is a flow chart illustrating different count of heartbeat during the game of FIG. 5. It is designed that the boat rowing process comprises stages of against current, stable cruising, and swift current. In the embodiment, a default heartbeat range (e.g., below 75 times/minute) is shown on display 3. In the beginning (i.e., exercise begin), heartbeat increases. Note that a predetermined safe heartbeat is in the range of 80 times/minute to 120 times/minute and score is 100. Once heartbeat reaches 80 times/minute, it means that user can go on the game as long as heartbeat is within the safe range. Further, in the swift current period heartbeat is expected to accelerate to 110 times/minute so that boat may go on with added energy (note that energy will consume steadily as time goes on). Otherwise, boat may halt or move rearward with a display of decreasing energy. In the embodiment shown in FIG. 7, boat may change into speed boat, sailboat, and hydrofoil as heartbeat increases from 75 times/minute, 80 times/minute, and 110 times/minute correspondingly. Further, energy may increase or decrease depending on whether the running speed of user and thus heartbeat thereof conformed to the indication shown on display. In the end (i.e., game over as a sign of failure), hydrofoil may overturn. On the screen of display, mileage A, heartbeat count B (times/minute), calorie consumption C, safe range D, remained energy E, and game time are shown. A score and rank will be calculated at the end of game. As designed, the shorter the time for completing the required course the higher the energy and thus the score and the rank. Note that heartbeat count is increased or decreased during the game by suitably providing one of against current, stable cruising, and swift current on display for user to adjust running speed thereof.

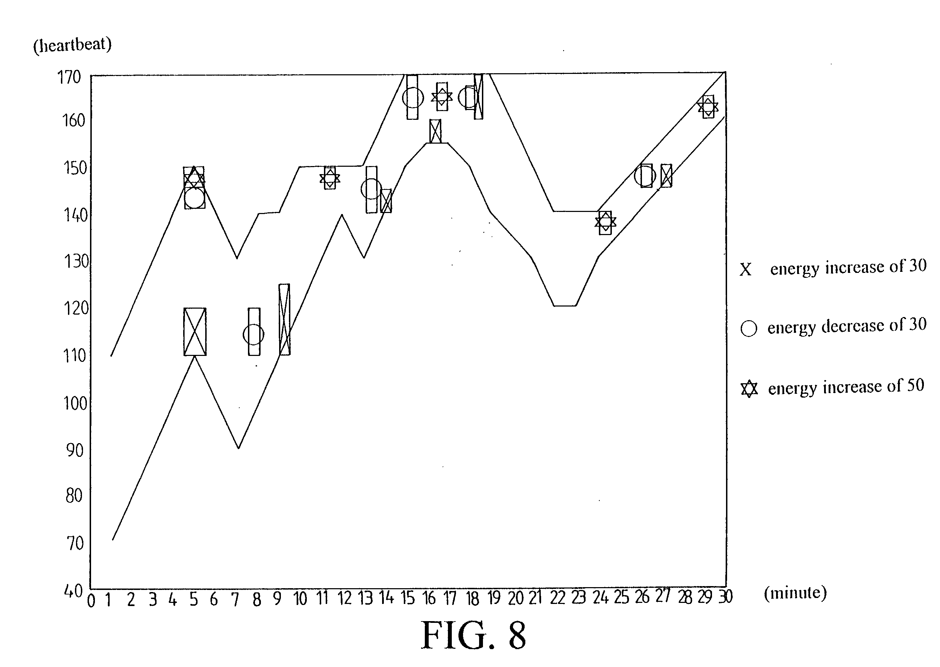

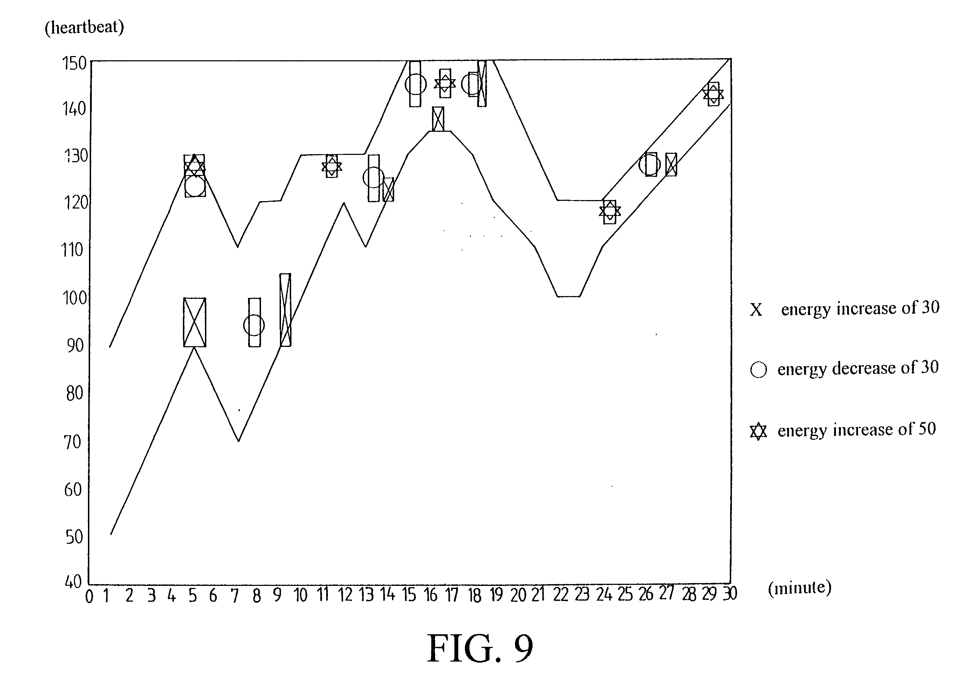

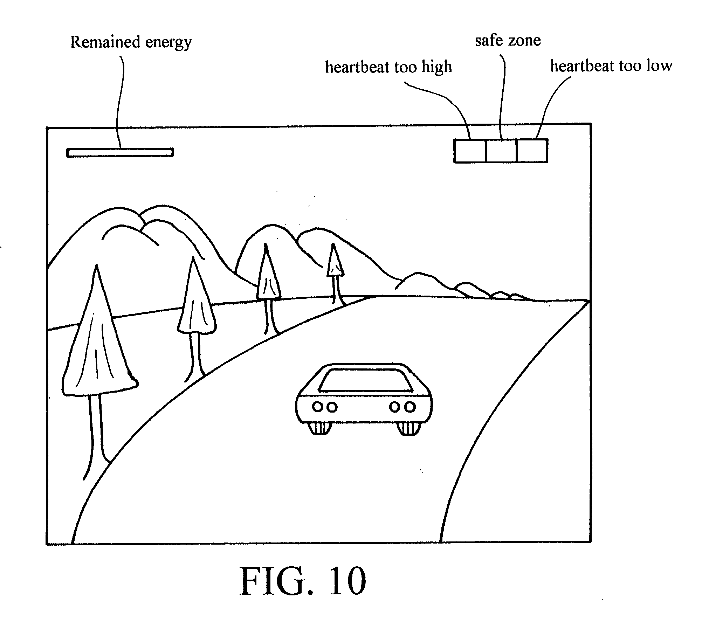

FIG. 8 is a graph illustrating heartbeat change versus time according to the invention, FIG. 9 is another graph illustrating heartbeat change versus time according to the invention, and FIG. 10 is a plan view of display showing a game picture of road racing. In FIG. 8, a zone between upper and lower curves is identified as a safe zone during the game. Note that indications of remained energy, heartbeat too high, safe zone, and heartbeat too low are shown on display for user reference (FIG. 10). The safe zone shown in FIG. 8 is designed for ordinary people. As to that shown in FIG. 9, the safe zone is designed for weak people in a range of 50 and 90.

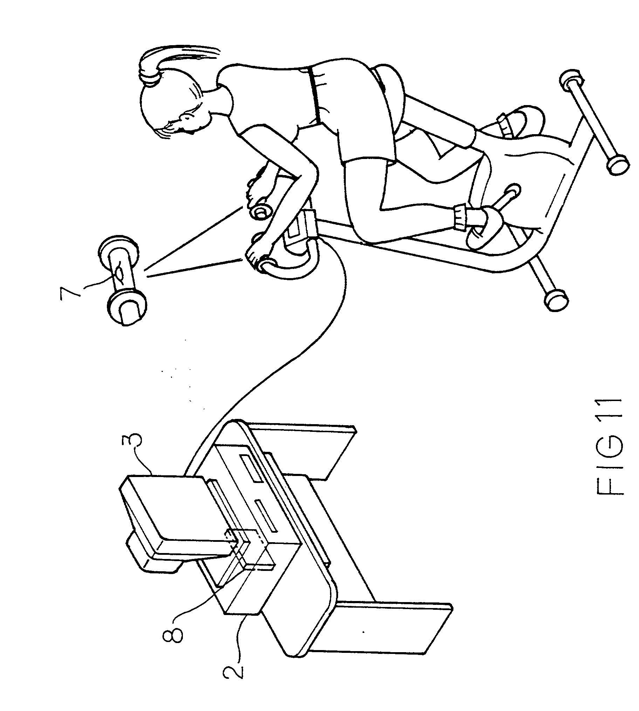

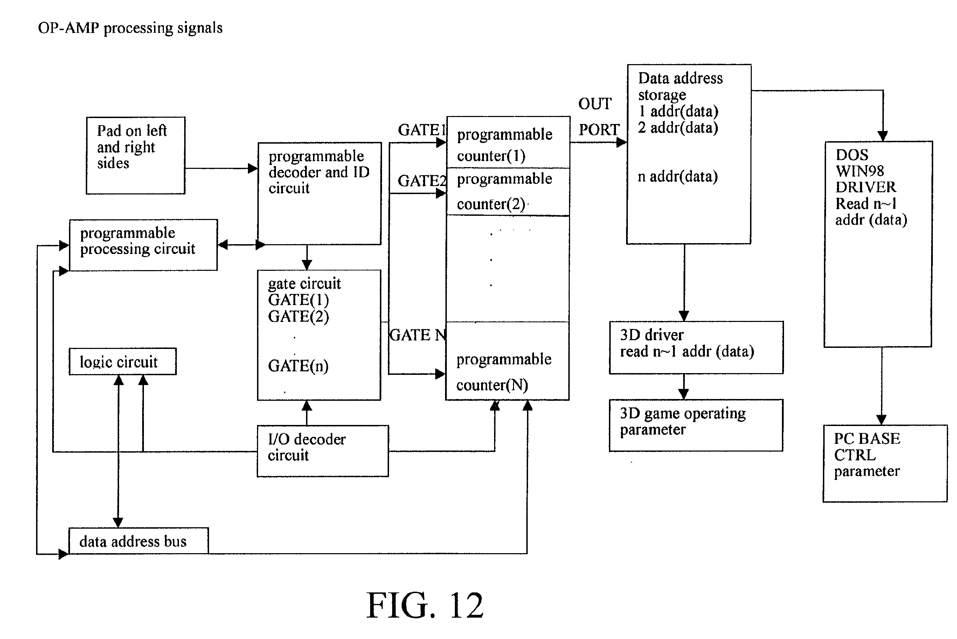

FIG. 11 is an environmental view of another preferred embodiment of interactive game apparatus according to the invention in use, and FIG. 12 is a block diagram of converter and receiver of FIG. 11 apparatus according to the invention. The differences between this and above embodiments are detailed below. Heartbeat detection device 1 is installed on an exerciser (e.g., bicycle) with two conductive pads 7 installed on two handlebars of bicycle. As to other components and operation of this embodiment, they are substantially the same as the first one. Thus a detailed description thereof is omitted herein for the sake of brevity.

While the invention has been described by means of specific embodiments, numerous modifications and variations could be made thereto by those skilled in the art without departing from the scope and spirit of the invention set forth in the claims.

## Claims

1. An apparatus for performing an interactive game comprising:
heartbeat detection means worn by a user or operatively coupled to a part of a user, said heartbeat detection means including a heartbeat detector and transmitter means;
a game machine having game software installed therein and including a central processing unit (CPU) capable of processing audio and video signals and a logic unit;
converter and receiver means coupled to said heartbeat detection means ; and
a display.

2. The apparatus of claim 1, further comprising a process comprises the steps of installing two conductive pads, measuring a voltage drop across said pads, calculating a micro voltage from the measured voltage, processing the micro voltage in an operating amplifier for obtaining a heartbeat signals for output, decoding the heartbeat signals, transmitting the decoded heartbeat signals by utilizing radio frequency (RF) means, receiving the transmitted signals by a RF receiver in an image processing means, and said receiving said signals by said converter and receiver means for converting into a heartbeat parameter.

3. The apparatus of claim 2, wherein said heartbeat parameter is one of remained game time, game energy consumption, calorie consumption, and heartbeat safety value.

4. The apparatus of claim 1, wherein a plurality of different heartbeat stages and a plurality of heartbeat time periods are set for calculating a score and a rank of user after game over.

5. The apparatus of claim 1, wherein information shown on said display comprises a mileage, a heartbeat count, a calorie consumption, a safe range, a remained energy, and a game time.

6. The apparatus of claim 4, wherein the shorter the time for completing a course required by said game the higher the energy, the score, and the rank.

7. The apparatus of claim 5, wherein user is capable of adjusting a running speed thereof by referring to an increase or decrease of the heartbeat count.

8. The apparatus of claim 1, wherein information shown on said display further comprises an indication of heartbeat too high, an indication of safe zone, and an indication of heartbeat too low.
